# EUROPEAN PATENT APPLICATION

(11) **EP 4 700 373 A1**
(43) Date of publication of application: **25.02.2026**
(21) Application number: 25159332.3
(22) Date of filing: 21.02.2025
(51) Int. Cl.: G01N 21/88, G01N 21/95, G06T 7/11, G06T 7/73, H04N 23/60, H04N 23/00

(54) **IMAGE CAPTURE SYSTEM, PROGRAM, AND METHOD**

(30) Priority: 20.08.2024 JP 2024138514
(71) Applicant: FUJIFILM Business Innovation Corp., Minato-ku Tokyo (JP)
(72) Inventor: TASAKI, Kaito, Ebina-shi (JP); AIKAWA, Kiyofumi, Ebina-shi (JP); FUKUNAGA, Kazuya, Ebina-shi (JP); KUWADA, Yoshitaka, Ebina-shi (JP)
(74) Representative: Haseltine Lake Kempner LLP

(57) **Abstract**

An image capture system includes a portable image capturer including a light source, a camera, and a measurer capable of measuring a distance between the image capturer and an imaging target and a shape of the imaging target, and a processor configured to measure the distance between the image capturer and the imaging target and the shape of the imaging target, and assist a user in capturing specular reflection images when the image capturer has moved to a position and an orientation with which an area of a surface of the imaging target whose distance and shape have been measured is in a specular reflection condition at a time of capture of an image of the imaging target by the image capturer.

## Description

### Background

### (i) Technical Field

The present disclosure relates to an image capture system, a program, and a method.

### (ii) Related Art

Japanese Unexamined Patent Application Publication No. 2005-050015 discloses a method for reading a degree of gloss capable of reading, even when a subject has a large curved surface, specular reflection intensity of all surfaces of the subject by capturing an image of the subject plural times using imaging means, which captures an image of the subject with at least one channel, while relatively moving a light source that radiates light and the imaging means, comparing channel value data for each of pixels of plural images obtained through the capture to obtain a maximum value of each of channel values, and creating a maximum value image indicating the maximum channel values of the pixels.

Japanese Unexamined Patent Application Publication No. 2019-082838 discloses a display system capable of displaying a texture of large area through simple calculation using a smaller amount of image data than when a large amount of image data is obtained by capturing images from various angles using a camera and a texture of a surface of an object is displayed using the image data.

Japanese Unexamined Patent Application Publication No. 2022-047371 discloses an inspection apparatus capable of obtaining, by obtaining image information indicating images of a target continuously captured while moving a scanning unit including a camera, a laser sensor, a white light source, and an invisible-light laser light source relative to the target, extracting, from the image information, area images within a predetermined range from a specular reflection angle, and combining the extracted area images together to generate a defect detection image for detecting a defect of the target, an image more suitable for inspection of a defect on an external surface of the target than when a specular reflection image is captured.

### Summary

A three-dimensional model of an imaging target is generated using images of the imaging target captured from various angles. There are cases where a gloss state of an imaging target is desired to be included in a three-dimensional model in order to reproduce a texture of the imaging target in the three-dimensional model. In order to generate a three-dimensional model including a gloss state, specular reflection images of all surfaces of an imaging target need to be exhaustively captured. Here, a specular reflection image refers to an image captured in a state where light radiated from a light source is reflected from a certain part of an imaging target and specularly reflected light as a component of the reflected light is directly incident on a camera. When an imaging target has a complex surface shape including a curved surface, for example, it is difficult to determine positions from which images of the imaging target are to be captured in a specular reflection condition.

Accordingly, it is an object of the present disclosure to provide an image capture system, a program, and a method capable of capturing specular reflection images of all surfaces of an imaging target when the imaging target is captured using an image capturer including a light source.

According to a first aspect of the present disclosure, there is provided an image capture system including a portable image capturer including a light source, a camera, and a measurer capable of measuring a distance between the image capturer and an imaging target and a shape of the imaging target, and a processor configured to measure the distance between the image capturer and the imaging target and the shape of the imaging target, and assist a user in capturing specular reflection images when the image capturer has moved to a position and an orientation with which an area of a surface of the imaging target whose distance and shape have been measured is in a specular reflection condition at a time of capture of an image of the imaging target by the image capturer.

According to a second aspect of the present disclosure, there is provided the image capture system according to the first aspect, in which the processor is configured to assist the user in capturing specular reflection images by notifying the user that a position and an orientation of the image capturer coincide with the position and the orientation with which the area of the surface of the imaging target is in the specular reflection condition at the time of the capture of the image of the imaging target.

According to a third aspect of the present disclosure, there is provided the image capture system according to the first aspect, in which the processor is configured to assist the user in capturing specular reflection images by capturing an image of the imaging target using the image capturer without receiving an operation performed by the user when a position and an orientation of the image capturer coincide with the position and the orientation with which the area of the surface of the imaging target is in the specular reflection condition at the time of the capture of the image of the imaging target.

According to a fourth aspect of the present disclosure, there is provided the image capture system according to the first aspect, in which the processor is configured to assist the user in capturing specular reflection images by dividing the surface of the imaging target whose shape has been identified into a plurality of areas and displaying, among the plurality of areas, areas whose images have been obtained with positions and orientations with which the specular reflection condition is established and areas whose images have not been obtained with positions and orientations with which the specular reflection condition is established in different display modes.

According to a fifth aspect of the present disclosure, there is provided the image capture system according to the fourth aspect, in which the processor is configured to display, when one of the areas whose images have not been obtained is selected, a guidance screen for guiding the user to a position and an orientation with which an image of the area whose image has not been obtained can be captured in the specular reflection condition from a current position and orientation of the image capturer determined from information regarding the distance between the image capturer and the imaging target measured using the measurer.

According to a sixth aspect of the present disclosure, there is provided the image capture system according to any one of the first to fifth aspects, in which the processor is configured to divide the surface of the imaging target into smaller areas as a surface shape of the imaging target becomes more complex, as a level of accuracy required for a specular reflection image to be captured becomes higher, or as illumination area of the light source becomes smaller.

According to a seventh aspect of the present disclosure, there is provided the image capture system according to any one of the first to sixth aspects, in which the measurer is a sensor capable of measuring distances between the image capturer and a plurality of points on the imaging target.

According to an eighth aspect of the present disclosure, there is provided the image capture system according to the seventh aspect, in which the sensor is a light detection and ranging sensor capable of measuring a distance to the imaging target for each of pixels used by the camera to capture an image.

According to a ninth aspect of the present disclosure, there is provided the image capture system according to any one of the first to eighth aspects, in which the processor is configured to calculate a position and an orientation of the image capturer with which an image of the area of the imaging target whose image is to be captured in the specular reflection condition can be captured in the specular reflection condition using information regarding a positional relationship and an angular relationship between the light source and the camera in the image capturer and a position of the area in a surface shape of the imaging target, whose shape has been identified.

According to a tenth aspect of the present disclosure, there is provided a program causing a computer to execute a process including measuring, using a portable image capturer including a light source, a camera, and a measurer capable of measuring a distance between the image capturer and an imaging target and a shape of the imaging target, the distance between the image capturer and the imaging target and the shape of the imaging target, and assisting a user in capturing specular reflection images when the image capturer has moved to a position and an orientation with which an area of a surface of the imaging target whose distance and shape have been measured is in a specular reflection condition at a time of capture of an image of the imaging target by the image capturer.

According to an eleventh aspect of the present disclosure, there is provided a method including measuring, using a portable image capturer including a light source, a camera, and a measurer capable of measuring a distance between the image capturer and an imaging target and a shape of the imaging target, the distance between the image capturer and the imaging target and the shape of the imaging target, and assisting a user in capturing specular reflection images when the image capturer has moved to a position and an orientation with which an area of a surface of the imaging target whose distance and shape have been measured is in a specular reflection condition at a time of capture of an image of the imaging target by the image capturer.

According to the first aspect of the present disclosure, specular reflection images of all surfaces of an imaging target can be captured when the image capturer including the light source captures images of the imaging target.

According to the second aspect of the present disclosure, the user can recognize, just by moving the image capturer, that the position and orientation of the image capturer have become a position and an orientation with which an image of an area of a surface of the imaging target is in the specular reflection condition.

According to the third aspect of the present disclosure, the user can automatically capture, just by moving the image capturer, a specular reflection image of the area of the surface of the imaging target.

According to the fourth aspect of the present disclosure, the user can recognize areas whose images have not been obtained with positions and orientations with which the specular reflection condition is established.

According to the fifth aspect of the present disclosure, the user can move the image capturer to a position and an orientation with which an image of a selected area whose area has not been obtained is captured in the specular reflection condition.

According to the sixth aspect of the present disclosure, accuracy of a specular reflection image to be captured can be made closer to a required level of accuracy than when sizes of areas obtained by dividing the surface of the imaging target are the same.

According to the seventh aspect of the present disclosure, specular reflection images of all surfaces of an imaging target can be exhaustively captured when the image capturer including the light source captures images of the imaging target.

According to the eighth aspect of the present disclosure, specular reflection images of all surfaces of an imaging target can be exhaustively captured when the image capturer including the light source captures images of the imaging target.

According to the ninth aspect of the present disclosure, a position and an orientation of the image capturer with which an image of a certain area can be captured in the specular reflection condition can be calculated just by setting a positional relationship and an angular relationship between the light source and the camera.

According to the tenth aspect of the present disclosure, specular reflection images of all surfaces of an imaging target can be captured when the image capturer including the light source captures images of the imaging target.

According to the eleventh aspect of the present disclosure, specular reflection images of all surfaces of an imaging target can be captured when the image capturer including the light source captures images of the imaging target.

### Brief Description of the Drawings

An exemplary embodiment of the present disclosure will be described in detail based on the following figures, wherein:
Fig. 1 is a diagram illustrating a situation where a mobile terminal apparatus, which is an image capture system according to an exemplary embodiment of the present disclosure, is used to capture an image of an imaging target;
Fig. 2 is a block diagram illustrating hardware configuration of the mobile terminal apparatus according to the exemplary embodiment of the present disclosure;
Fig. 3 is a block diagram illustrating functional configuration of the mobile terminal apparatus according to the exemplary embodiment of the present disclosure;
Fig. 4 is a flowchart illustrating operations at a time when the mobile terminal apparatus according to the present exemplary embodiment of the present disclosure captures specular reflection images of all surfaces of the imaging target;
Fig. 5 is a diagram illustrating a method for calculating, for a certain block, a position and an angle of the mobile terminal apparatus at which a specular reflection condition is established;
Fig. 6 is a diagram illustrating different positions and angles of the mobile terminal apparatus for different blocks at which the specular reflection condition is established;
Fig. 7 is a diagram illustrating an example of a specular reflection image captured in a state where a certain block of the imaging target is in the specular reflection condition;
Fig. 8 is a diagram illustrating an example of a case where blocks whose specular reflection images have not been obtained and blocks whose specular reflection images have been obtained are displayed in different display colors;
Fig. 9 is a diagram illustrating a situation where a certain one of the blocks whose specular reflection images have not been obtained is selected on a touch panel;
Fig. 10 is a diagram illustrating a first example of a guidance screen for moving the mobile terminal apparatus to a position at which an image of the selected block can be captured in the specular reflection condition;
Fig. 11 is a diagram illustrating a second example of the guidance screen for moving the mobile terminal apparatus to the position at which an image of the selected block can be captured in the specular reflection condition;
Fig. 12 is a diagram illustrating a third example of the guidance screen for moving the mobile terminal apparatus to the position at which an image of the selected block can be captured in the specular reflection condition;
Fig. 13 is a diagram illustrating an example of a case where a light source is attached to the mobile terminal apparatus;
Fig. 14 is a diagram illustrating another example of the case where a light source is attached to the mobile terminal apparatus;
Fig. 15 is a diagram illustrating another example of the case where a light source is attached to the mobile terminal apparatus; and
Fig. 16 is a diagram illustrating another example of the case where a light source is attached to the mobile terminal apparatus.

### Detailed Description

Next, an exemplary embodiment of the present disclosure will be described in detail with reference to the drawings.

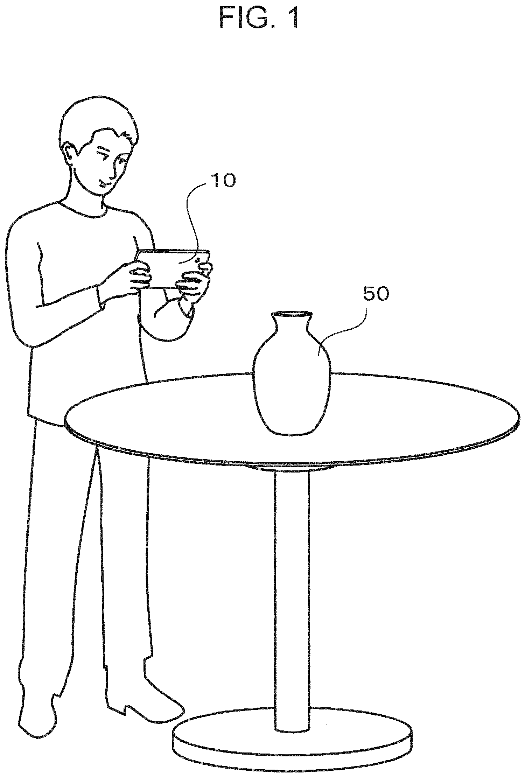

Fig. 1 illustrates a situation where a mobile terminal apparatus 10, which is an image capture system according to an exemplary embodiment of the present disclosure, is used to capture an image of an imaging target 50.

A three-dimensional model of an imaging target is generated using images of the imaging target captured from various angles. There are cases where a gloss state of an imaging target is desired to be included in a three-dimensional model in order to reproduce a texture of the imaging target in the three-dimensional model. In order to generate a three-dimensional model including a gloss state, specular reflection images of all surfaces of an imaging target need to be exhaustively captured. Here, a specular reflection image refers to an image captured in a state where light radiated from a light source is reflected from a certain part of an imaging target and specularly reflected light as a component of the reflected light is directly incident on a camera. A specular reflection image also refers to an image in which a particular area of an imaging target is in a specular reflection condition. A specular reflection image does not refer to an image in which an entire area of an imaging target is in the specular reflection condition. That is, a specular reflection image includes both an area in the specular reflection condition and an area that is not in the specular reflection condition.

In the present exemplary embodiment, a case where, as illustrated in Fig. 1, the imaging target is a three-dimensional imaging target 50 including a curved surface in a surface shape thereof will be described. The imaging target, however, may be a sheet-like object that appears to be nearly flat, instead of a three-dimensional object. The present disclosure can be applied to not only a case where the imaging target is the entirety of an object but also a case where the imaging target is only a part of an object. For example, the present disclosure can be applied to a case where the imaging target is not the entirety of a table but only a tabletop.

In the image capture system according to the present exemplary embodiment, images of the imaging target 50 are captured from various angles in order to generate a three-dimensional model of the imaging target 50 illustrated in Fig. 1. Specular reflection images of all surfaces of the imaging target 50 are then exhaustively captured in order to include a gloss state of the imaging target 50 in the three-dimensional model to be generated. When the three-dimensional model of the imaging target 50 illustrated in Fig. 1 is to be generated, however, it is difficult to determine positions from which images of the imaging target 50 are to be captured in the specular reflection condition, since the surface shape of the imaging target 50 includes a curved surface.

In the image capture system according to the present exemplary embodiment, therefore, the specular reflection images of all the surfaces of the imaging target 50 can be captured by performing a process that will be described later when the mobile terminal apparatus 10 including a light source captures images of the imaging target 50.

Here, the mobile terminal apparatus 10 is achieved by, for example, a mobile telephone terminal such as a smartphone, a tablet terminal, or the like. The mobile terminal apparatus 10 is a portable image capturer including a light source, a camera, and a measurer capable of measuring a distance between the mobile terminal apparatus 10 and the imaging target and a shape of the imaging target. The measurer is a sensor capable of measuring distances between the mobile terminal apparatus 10 and plural points on the imaging target. More specifically, this sensor is a light detection and ranging (LiDAR) sensor capable of measuring a distance to the imaging target for each of pixels used by the camera to capture an image. Although it has been described that the LiDAR sensor is capable of measuring the distance between the mobile terminal apparatus 10 and the imaging target, what is actually measured is a distance between the LiDAR sensor and the imaging target.

Although it has been described that the LiDAR sensor is capable of measuring the shape of the imaging target, the measurement of the distance to the imaging target and the shape of the imaging target includes a case where the shape of the imaging target is identified from information regarding the distance to the imaging target. The distance to the imaging target and the shape of the imaging target may be separately measured.

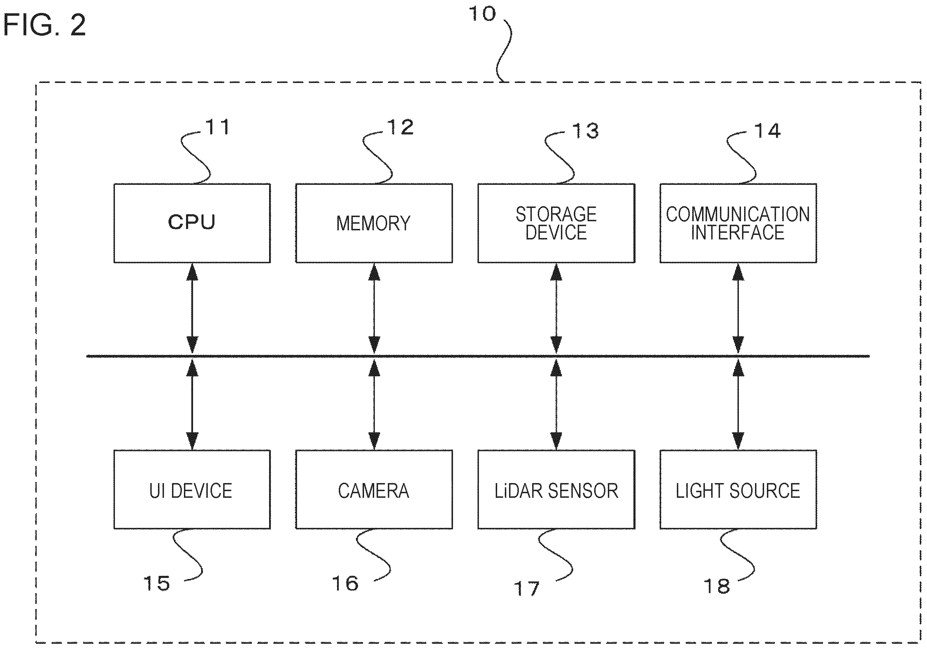

Next, Fig. 2 illustrates hardware configuration of the mobile terminal apparatus 10 included in the imaging capture system according to the present exemplary embodiment.

As illustrated in Fig. 2, the mobile terminal apparatus 10 includes a central processing unit (CPU) 11, a memory 12, a storage device 13 such as a flash memory, a communication interface (IF) 14 that transmits and receives data to and from external apparatuses over a wireless communication network, a user interface (UI) device 15 including a touch panel or a liquid crystal display, a camera 16, a LiDAR sensor 17, and a light source 18.

The CPU 11 is a processor that performs predetermined processing on the basis of a control program stored in the memory 12 or the storage device 13 to control operation of the mobile terminal apparatus 10. Although it has been described in the present exemplary embodiment that the CPU 11 reads and executes the control program stored in the memory 12 or the storage device 13, how to provide the control program is not limited to this. The control program may be stored in a computer readable storage medium and provided, instead. For example, the program may be stored in an optical disc such as a compact disc read-only memory (CD-ROM) or a digital versatile disc read-only memory (DVD-ROM) or a semiconductor memory such as a universal serial bus (USB) memory or a memory card and provided. Alternatively, the control program may be obtained from an external apparatus over the communication network connected to the communication interface 14. The control program may be provided as independent application software or incorporated into software of the mobile terminal apparatus 10 as a function of the mobile terminal apparatus 10, instead.

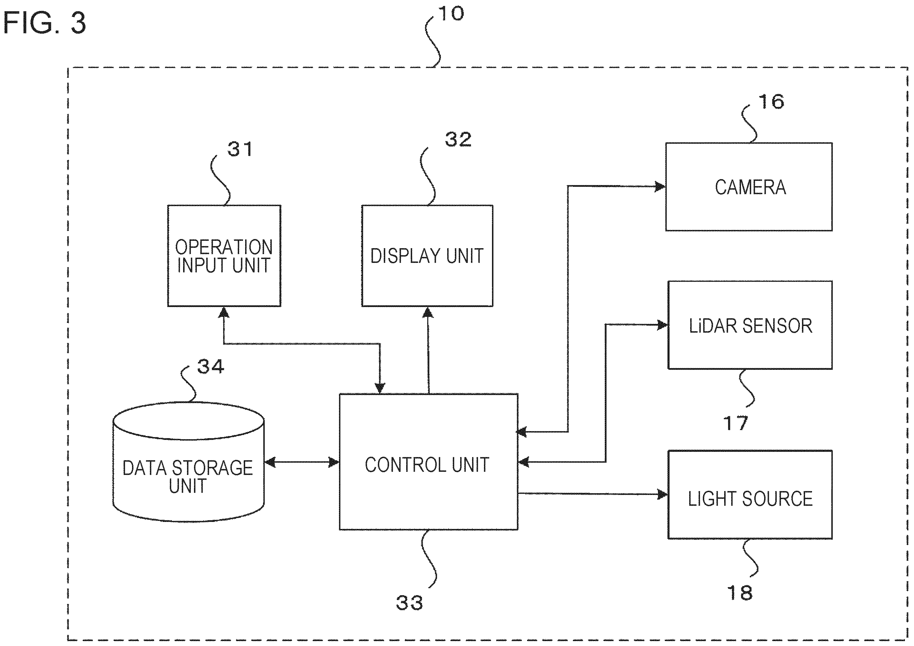

Fig. 3 is a block diagram illustrating functional configuration of the mobile terminal apparatus 10 achieved by executing the control program.

As illustrated in Fig. 3, the mobile terminal apparatus 10 according to the present exemplary embodiment includes an operation input unit 31, a display unit 32, a control unit 33, a data storage unit 34, the camera 16, the LiDAR sensor 17, and the light source 18. In Fig. 3, functional configurations that are not related to the techniques in the present disclosure, including a communication function, are omitted. Although the camera 16 and the LiDAR sensor 17 are separate components in the present exemplary embodiment, a LiDAR camera as an integrated form of these may be used, instead.

The display unit 32 displays various types of information for a user under the control of the control unit 33. The operation input unit 31 receives various types of operation information regarding operations performed by the user. The operation input unit 31 and the display unit 32 together constitute a touch panel.

The control unit 33 captures an image of the imaging target by controlling operation of the camera 16, the LiDAR sensor 17, and the light source 18 and stores the image in the data storage unit 34. The control unit 33 also performs an operation for receiving operation information from the operation input unit 31 and an operation for displaying various types of information on the display unit 32.

When capturing a specular reflection image of the imaging target, the control unit 33 first measures a distance between the mobile terminal apparatus 10 and the imaging target and a shape of the imaging target. When the mobile terminal apparatus 10 has moved to a position and an orientation with which an area of surfaces of the imaging target for which the distance and the shape have been measured is in the specular reflection condition at a time of capture of an image by the mobile terminal apparatus 10, the control unit 33 performs processing for assisting the user in capturing a specular reflection image.

For example, the control unit 33 assists the user in capturing a specular reflection image by notifying the user that a position and an orientation of the mobile terminal apparatus 10 have become the position and the orientation with which an area of the surfaces of the imaging target is in the specular reflection condition at the time of the capture of an image of the imaging target.

Alternatively, the control unit 33 assists the user in capturing a specular reflection image by capturing an image of the imaging target using the camera 16 of the mobile terminal apparatus 10 without receiving an operation performed by the user when the position and orientation of the mobile terminal apparatus 10 have become the position and the orientation with which an area of the surfaces of the imaging target is in the specular reflection condition at the time of the capture of an image of the imaging target.

Furthermore, the control unit 33 assists the user in capturing a specular reflection image by dividing the surfaces of the imaging target whose shape has been identified into plural areas and displaying, among the plural areas, areas whose images have been obtained with positions and orientations with which the specular reflection condition is established and areas whose images have not been obtained with positions and orientations with which the specular reflection condition is established in different display modes.

If, at this time, the user selects one of the areas whose images have not been obtained, the control unit 33 may display a guidance screen for guiding the user to a position and an orientation with which an image of the area whose image has not been obtained can be captured in the specular reflection condition from a current position and orientation of the mobile terminal apparatus 10 determined from information regarding the distance between the mobile terminal apparatus 10 and the imaging target measured using the LiDAR sensor 17.

Here, the control unit 33 divides the surfaces of the imaging target into smaller areas as the surface shape of the imaging target becomes more complex, as a level of accuracy required for a specular reflection image to be captured becomes higher, or as illumination area of the light source 18 becomes smaller.

The control unit 33 calculates a position and an orientation of the mobile terminal apparatus 10 with which an image of the area of the imaging target whose image is to be captured in the specular reflection condition can be captured in the specular reflection condition using information regarding a positional relationship and an angular relationship between the light source 18 and the camera 16 in the mobile terminal apparatus 10 and a position of the area in the surface shape of the imaging target, whose shape has been identified.

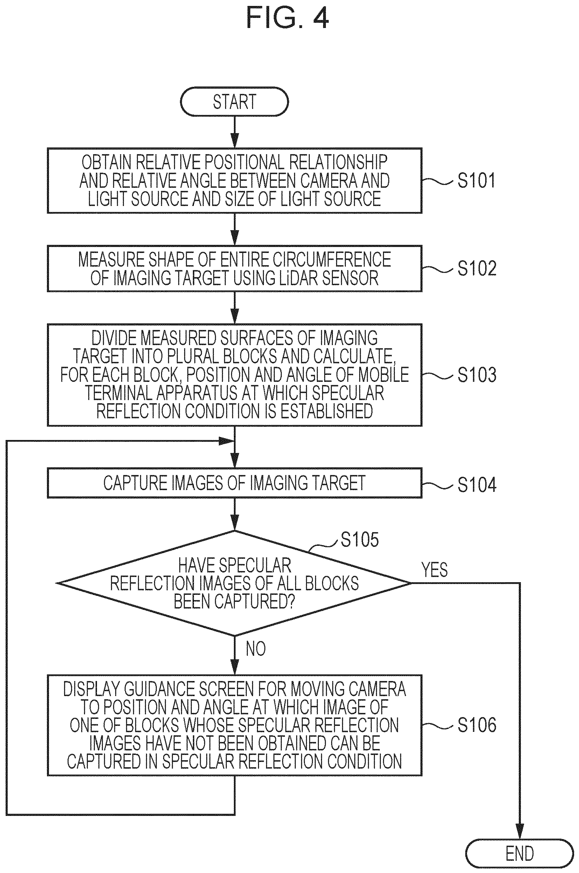

Next, operations at a time when the mobile terminal apparatus 10 according to the present exemplary embodiment captures specular reflection images of all the surfaces of the imaging target 50 illustrated in Fig. 1 will be described in detail with reference to Fig. 4.

First, in step S101, the control unit 33 obtains information regarding a relative positional relationship and a relative angle between the camera 16 and the light source 18 and a size of the light source 18. More specifically, the control unit 33 may obtain the information from the user through the operation input unit 31. Alternatively, the control unit 33 may obtain the information regarding the positional relationship between the camera 16 and the light source 18 of the mobile terminal apparatus 10 and the like by capturing an image of a mirror using the mobile terminal apparatus 10. When the camera 16 and the light source 18 included in the mobile terminal apparatus 10 are used, the control unit 33 may obtain the information regarding the positional relationship between the camera 16 and the light source 18 and the like using preset information.

Next, in step S102, the control unit 33 measures a shape of an entire circumference of the imaging target 50 using the LiDAR sensor 17.

The control unit 33 then, in step S103, divides the measured surfaces of the imaging target 50 into plural blocks, which is plural areas, and calculates, for each block, a position and an angle of the mobile terminal apparatus 10 at which the specular reflection condition is established.

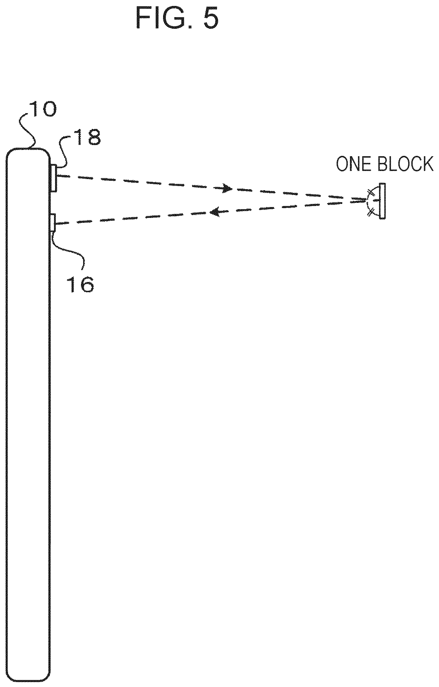

Here, a method for calculating, for a certain block, a position and an angle of the mobile terminal apparatus 10 at which the specular reflection condition is established will be described with reference to Fig. 5.

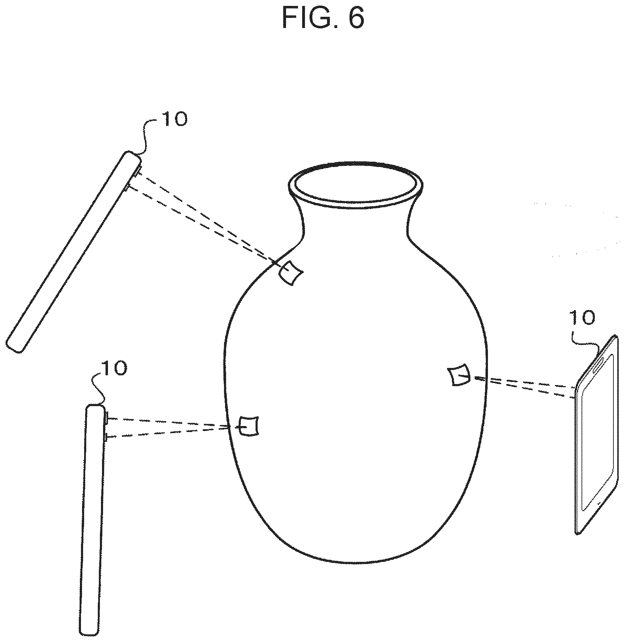

As illustrated in Fig. 5, when a certain block of the imaging target 50 is in the specular reflection condition, a positional relationship is established where light radiated from the light source 18 is reflected from the certain block and specularly reflected light as a component of the reflected light is directly incident on the camera 16. That is, when the surface shape of the imaging target 50 includes a curved surface as illustrated in Fig. 6, the position and angle of the imaging target 50 at which the specular reflection condition is established are different between the blocks.

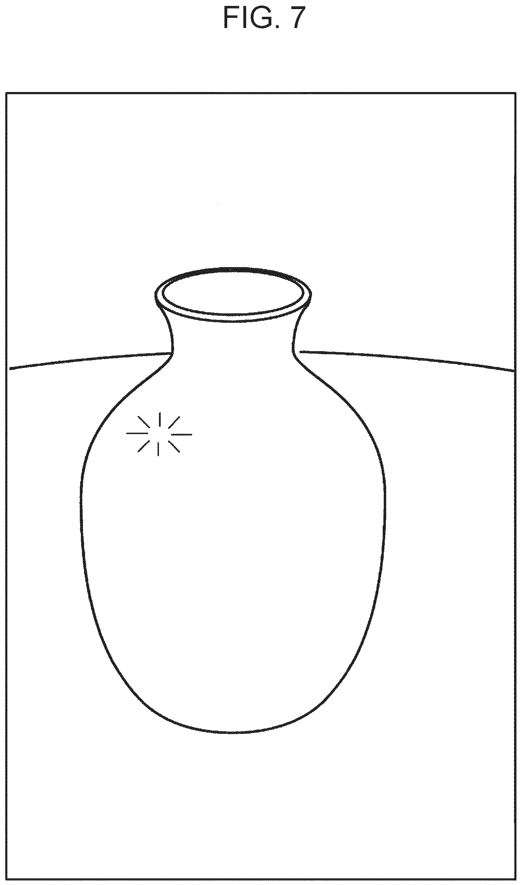

Fig. 7 illustrates an example of a specular reflection image captured in a state where a certain block of the imaging target 50 is in the specular reflection condition. It can be seen from Fig. 7 that an image has been obtained in which light specularly reflected from the certain block of the imaging target 50 is incident on the camera 16. That is, a specular reflection image is an image in which a particular area of an imaging target is in the specular reflection condition and glossy, and not an image in which the entirety of the imaging target is glossy. A specular reflection image thus includes both an area in the specular reflection condition and an area that is not in the specular reflection condition. A glossy three-dimensional model can therefore be generated by capturing specular reflection images, in each of which a block of an imaging target is glossy, of all surfaces of the imaging target and generating a three-dimensional model.

Next, in step S104, the control unit 33 captures images of the imaging target 50 by requesting the user to capture images of the circumference of the imaging target 50.

The control unit 33 then, step S105, determines whether specular reflection images of all the blocks have been captured.

If determining in step S105 that specular reflection images of all the blocks have been captured, the control unit 33 ends the process.

If determining in step S105 that specular reflection images of all the blocks have not been captured, on the other hand, the control unit 33 performs processing for assisting the user in capturing, in the specular reflection condition, images of blocks whose specular reflection images have not been obtained. For example, the control unit 33 displays blocks whose specular reflection images have not been obtained and blocks whose specular reflection images have been obtained in different display modes, that is, for example, in different display colors.

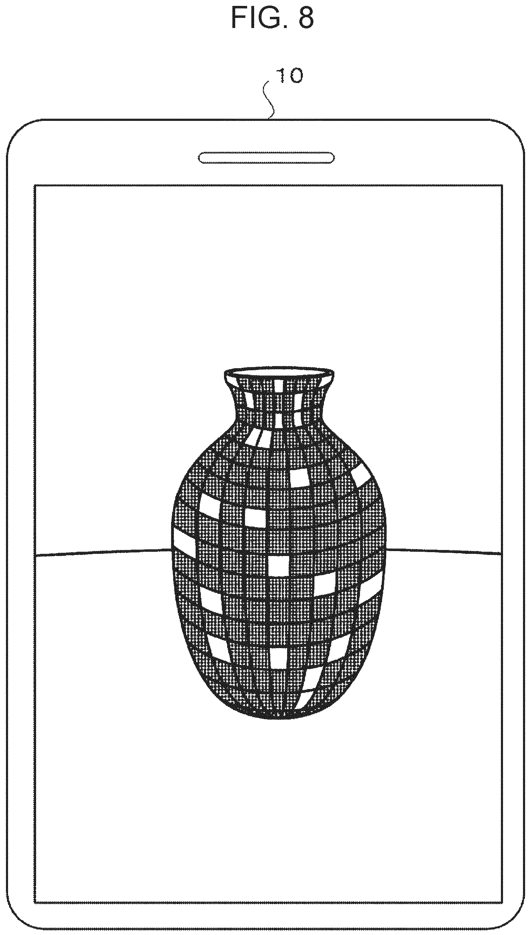

Fig. 8 illustrates an example of a case where blocks whose specular reflection images have not been obtained and blocks whose specular reflection images have been obtained are displayed in different display colors. In Fig. 8, the blocks whose specular reflection images have been obtained are displayed in black hatching, and the blocks whose specular reflection images have not been obtained are displayed in white. The user can recognize, by taking a look at how the blocks are displayed, positions of the blocks whose specular reflection images have not been obtained.

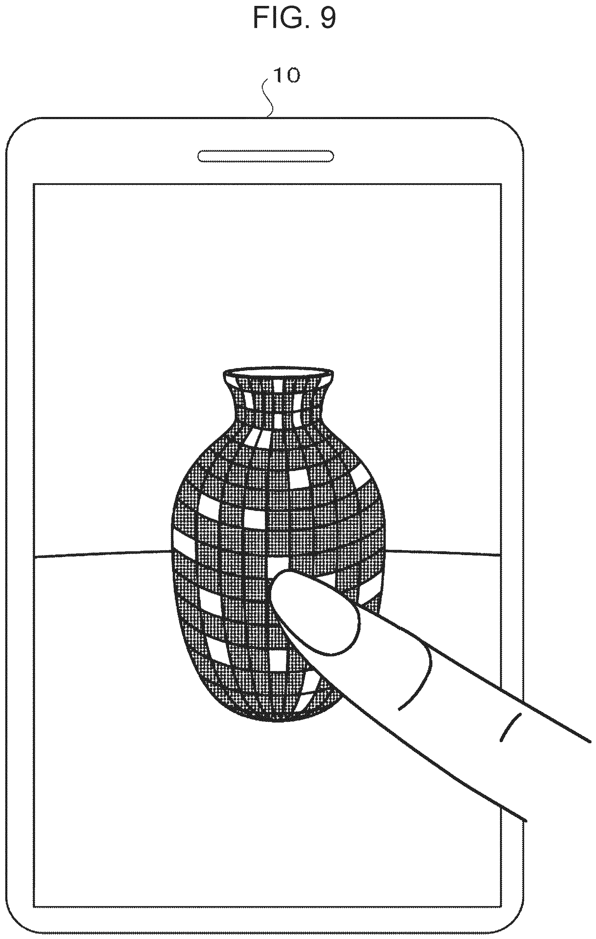

The control unit 33 then, in step S106, displays a guidance screen for moving the mobile terminal apparatus 10 to a position and an angle at which an image of one of the blocks whose specular reflection images have not been obtained can be captured in the specular reflection condition. As illustrated in Fig. 9, for example, the user selects, on the touch panel, one of the blocks whose specular reflection images have not been obtained. The control unit 33 then displays a guidance screen for moving the mobile terminal apparatus 10 to a position at which an image of the block selected by the user can be captured in the specular reflection condition.

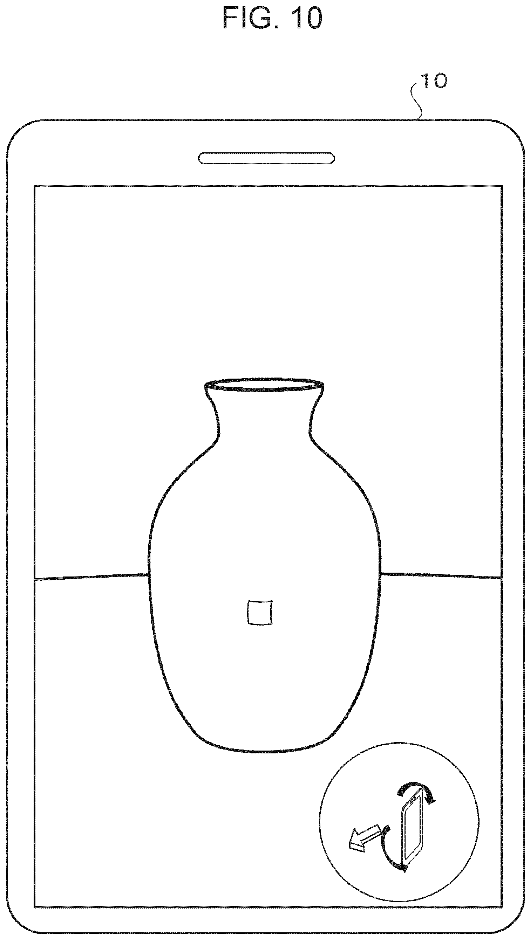

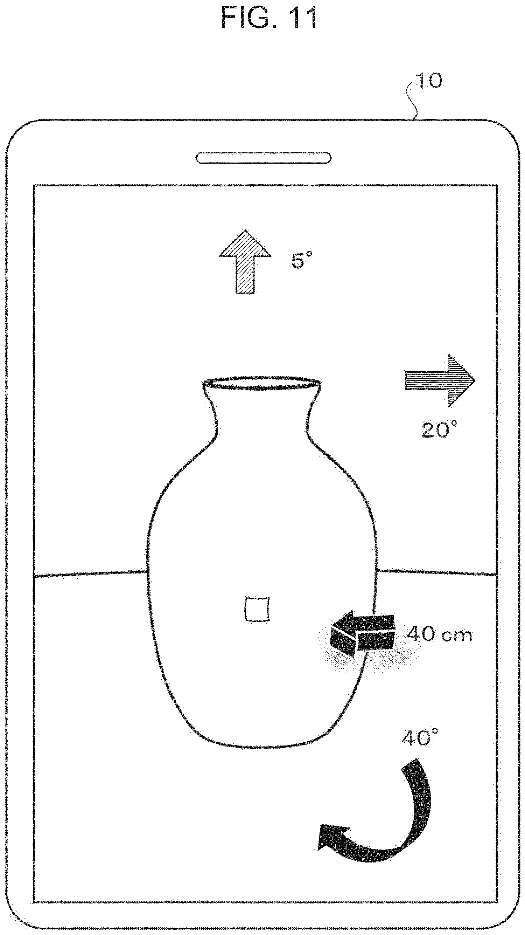

Figs. 10 to 12 illustrate specific examples of the guidance screen. Fig. 10 illustrates a guidance screen in which arrows indicate directions in which the mobile terminal apparatus 10 is to be moved and rotated and sizes of the arrows indicate the amount of movement and the amount of rotation. In Fig. 11, an arrow at a center of the touch panel indicates a movement direction of the mobile terminal apparatus 10, and arrows in a periphery of the touch panel indicate rotational directions of the mobile terminal apparatus 10. Fig. 11 illustrates a guidance screen in which values indicate the amount of movement and the amount of rotation.

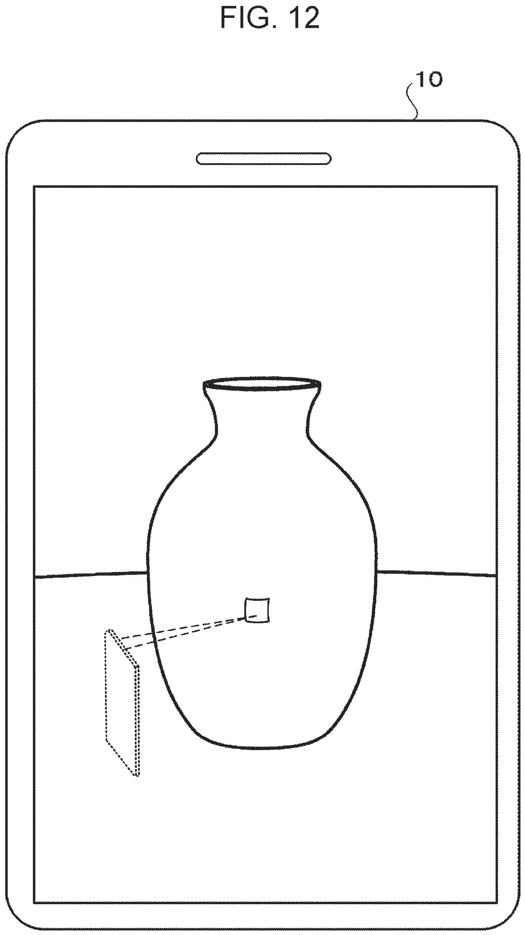

Fig. 12 illustrates an example of a guidance screen in which a virtual mobile terminal apparatus 10 is displayed on the touch panel in augmented reality (AR) at a position and an angle to be achieved by the mobile terminal apparatus 10. The user can move the mobile terminal apparatus 10 to the position at which an image of the selected block can be captured in the specular reflection condition by moving the mobile terminal apparatus 10 such that the mobile terminal apparatus 10 overlaps the mobile terminal apparatus 10 displayed in AR.

Alternatively, the control unit 33 may assist the user in capturing specular reflection images by requesting the user to capture images of the entire circumference of the imaging target 50 and notifying, using a notification sound or the like, the user that the position and orientation of the mobile terminal apparatus 10 coincide with a position and an orientation with which an image of a block whose specular reflection image has not been obtained can be captured in the specular reflection image.

Alternatively, the control unit 33 may assist the user in capturing specular reflection images by automatically capturing an image of the imaging target 50 using the camera 16 when the position and orientation of the mobile terminal apparatus 10 coincide with a position and an orientation with which a block whose specular reflection image has not been obtained can be captured in the specular reflection condition.

An image of the imaging target 50 is repeatedly captured through the above-described process, and if determining in step S105 that specular reflection images of the all the blocks have been captured, the control unit 33 ends the process.

The user can thus exhaustively capture specular reflection images of all the surfaces of the imaging target 50 by capturing images of the imaging target 50 in accordance with the guidance screen.

In the above-described exemplary embodiment, a case where images are captured while radiating light onto the imaging target 50 using the light source 18 incorporated into the mobile terminal apparatus 10 has been described. A configuration where a light source is attached to the mobile terminal apparatus 10 from the outside and images of the imaging target 50 are captured, however, may be employed, instead.

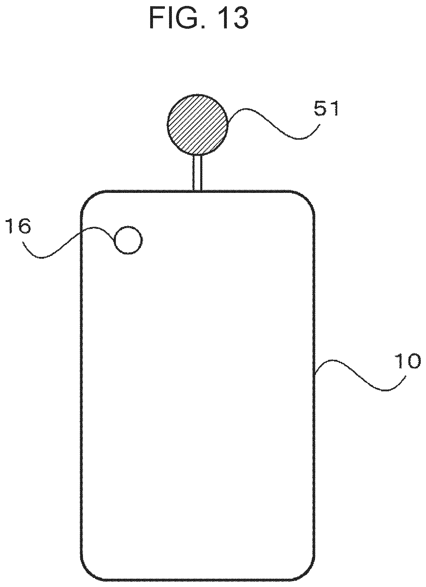

Figs. 13 to 16 illustrate specific examples of a case where a light source is attached to the mobile terminal apparatus 10.

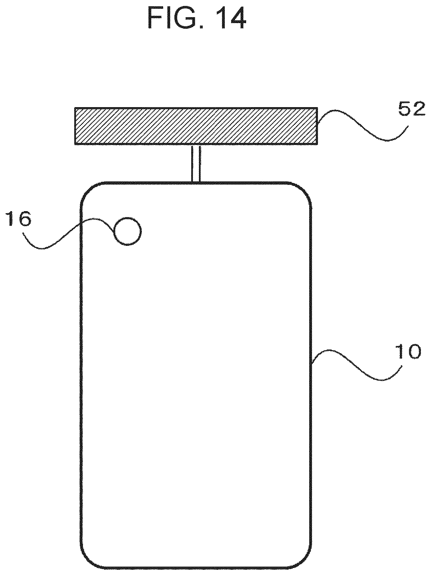

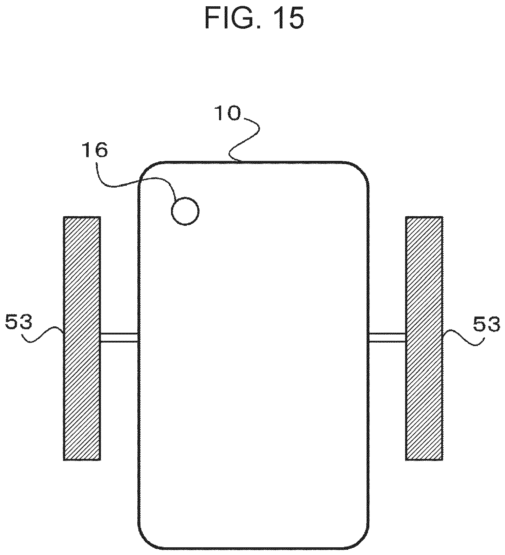

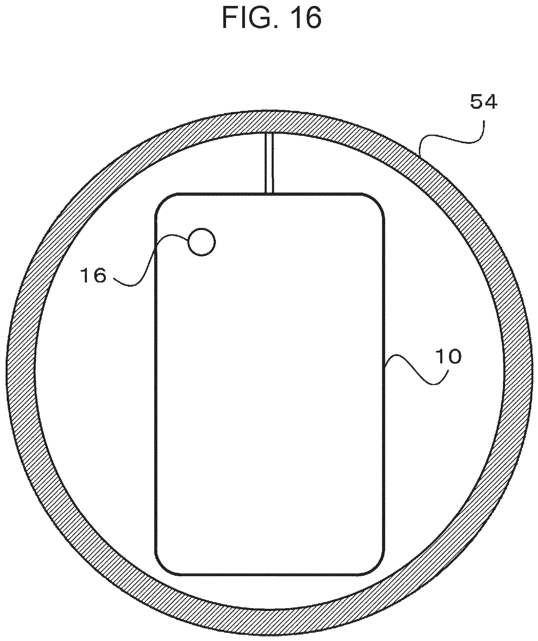

Fig. 13 is a diagram illustrating a state where a spherical light source 51 is attached to the mobile terminal apparatus 10. Fig. 14 is a diagram illustrating a state where a wide bar light source 52 is attached to the mobile terminal apparatus 10. Fig. 15 is a diagram illustrating a state where two bar light sources 53 are attached to the mobile terminal apparatus 10 from both sides. Fig. 16 is a diagram illustrating a state where a ring light source 54 is attached to the mobile terminal apparatus 10. Even when a light source is attached to the mobile terminal apparatus 10 like this, the above-described process can be performed insofar as information regarding a relative positional relationship and a relative angle between the camera 16 and the light source, a size of the light source, and the like is set in advance.

As described above, by attaching a light source to the mobile terminal apparatus 10, illumination area may be increased, and a size of each of blocks obtained by dividing surfaces of an imaging target may be increased. As a result, time taken to capture specular reflection images of all the surfaces of the imaging target may be reduced, which makes it possible to efficiently capture images.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The "system" in the present exemplary embodiment includes both a system achieved by plural apparatuses and a system achieved by a single apparatus.

The techniques in the present disclosure can be applied to a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An image capture system including:
   a portable image capturer including a light source, a camera, and a measurer capable of measuring a distance between the image capturer and an imaging target and a shape of the imaging target; and
   a processor configured to:
      measure the distance between the image capturer and the imaging target and the shape of the imaging target; and
      assist a user in capturing specular reflection images when the image capturer has moved to a position and an orientation with which an area of a surface of the imaging target whose distance and shape have been measured is in a specular reflection condition at a time of capture of an image of the imaging target by the image capturer.
(((2))) The image capture system according to (((1))),
   in which the processor is configured to assist the user in capturing specular reflection images by notifying the user that a position and an orientation of the image capturer coincide with the position and the orientation with which the area of the surface of the imaging target is in the specular reflection condition at the time of the capture of the image of the imaging target.
(((3))) The image capture system according to (((1))),
   in which the processor is configured to assist the user in capturing specular reflection images by capturing an image of the imaging target using the image capturer without receiving an operation performed by the user when a position and an orientation of the image capturer coincide with the position and the orientation with which the area of the surface of the imaging target is in the specular reflection condition at the time of the capture of the image of the imaging target.
(((4))) The image capture system according to (((1))),
   in which the processor is configured to assist the user in capturing specular reflection images by dividing the surface of the imaging target whose shape has been identified into a plurality of areas and displaying, among the plurality of areas, areas whose images have been obtained with positions and orientations with which the specular reflection condition is established and areas whose images have not been obtained with positions and orientations with which the specular reflection condition is established in different display modes.
(((5))) The image capture system according to (((4))),
   in which the processor is configured to display, when one of the areas whose images have not been obtained is selected, a guidance screen for guiding the user to a position and an orientation with which an image of the area whose image has not been obtained can be captured in the specular reflection condition from a current position and orientation of the image capturer determined from information regarding the distance between the image capturer and the imaging target measured using the measurer.
(((6))) The image capture system according to any one of (((1))) to (((5))),
   in which the processor is configured to divide the surface of the imaging target into smaller areas as a surface shape of the imaging target becomes more complex, as a level of accuracy required for a specular reflection image to be captured becomes higher, or as illumination area of the light source becomes smaller.
(((7))) The image capture system according to any one of (((1))) to (((6))),
   in which the measurer is a sensor capable of measuring distances between the image capturer and a plurality of points on the imaging target.
(((8))) The image capture system according to (((7))),
   in which the sensor is a light detection and ranging sensor capable of measuring a distance to the imaging target for each of pixels used by the camera to capture an image.
(((9))) The image capture system according to any one of (((1))) to (((8))),
   in which the processor is configured to calculate a position and an orientation of the image capturer with which an image of the area of the imaging target whose image is to be captured in the specular reflection condition can be captured in the specular reflection condition using information regarding a positional relationship and an angular relationship between the light source and the camera in the image capturer and a position of the area in a surface shape of the imaging target, whose shape has been identified.
(((10))) A program causing a computer to execute a process including:
   measuring, using a portable image capturer including a light source, a camera, and a measurer capable of measuring a distance between the image capturer and an imaging target and a shape of the imaging target, the distance between the image capturer and the imaging target and the shape of the imaging target; and
   assisting a user in capturing specular reflection images when the image capturer has moved to a position and an orientation with which an area of a surface of the imaging target whose distance and shape have been measured is in a specular reflection condition at a time of capture of an image of the imaging target by the image capturer.

According to (((1))), specular reflection images of all surfaces of an imaging target can be captured when the image capturer including the light source captures images of the imaging target.

According to (((2))), the user can recognize, just by moving the image capturer, that the position and orientation of the image capturer have become a position and an orientation with which an image of an area of a surface of the imaging target is in the specular reflection condition.

According to (((3))), the user can automatically capture, just by moving the image capturer, a specular reflection image of the area of the surface of the imaging target.

According to (((4))), the user can recognize areas whose images have not been obtained with positions and orientations with which the specular reflection condition is established.

According to (((5))), the user can move the image capturer to a position and an orientation with which an image of a selected area whose area has not been obtained is captured in the specular reflection condition.

According to (((6))), accuracy of a specular reflection image to be captured can be made closer to a required level of accuracy than when sizes of areas obtained by dividing the surface of the imaging target are the same.

According to (((7))), specular reflection images of all surfaces of an imaging target can be exhaustively captured when the image capturer including the light source captures images of the imaging target.

According to (((8))), specular reflection images of all surfaces of an imaging target can be exhaustively captured when the image capturer including the light source captures images of the imaging target.

According to (((9))), a position and an orientation of the image capturer with which an image of a certain area can be captured in the specular reflection condition can be calculated just by setting a positional relationship and an angular relationship between the light source and the camera.

According to (((10))), specular reflection images of all surfaces of an imaging target can be captured when the image capturer including the light source captures images of the imaging target.

## Claims

1. An image capture system comprising:
a portable image capturer including a light source, a camera, and a measurer capable of measuring a distance between the image capturer and an imaging target and a shape of the imaging target; and
a processor configured to:
measure the distance between the image capturer and the imaging target and the shape of the imaging target; and
assist a user in capturing specular reflection images when the image capturer has moved to a position and an orientation with which an area of a surface of the imaging target whose distance and shape have been measured is in a specular reflection condition at a time of capture of an image of the imaging target by the image capturer.

2. The image capture system according to claim 1,
wherein the processor is configured to assist the user in capturing specular reflection images by notifying the user that a position and an orientation of the image capturer coincide with the position and the orientation with which the area of the surface of the imaging target is in the specular reflection condition at the time of the capture of the image of the imaging target.

3. The image capture system according to claim 1,
wherein the processor is configured to assist the user in capturing specular reflection images by capturing an image of the imaging target using the image capturer without receiving an operation performed by the user when a position and an orientation of the image capturer coincide with the position and the orientation with which the area of the surface of the imaging target is in the specular reflection condition at the time of the capture of the image of the imaging target.

4. The image capture system according to claim 1,
wherein the processor is configured to assist the user in capturing specular reflection images by dividing the surface of the imaging target whose shape has been identified into a plurality of areas and displaying, among the plurality of areas, areas whose images have been obtained with positions and orientations with which the specular reflection condition is established and areas whose images have not been obtained with positions and orientations with which the specular reflection condition is established in different display modes.

5. The image capture system according to claim 4,
wherein the processor is configured to display, when one of the areas whose images have not been obtained is selected, a guidance screen for guiding the user to a position and an orientation with which an image of the area whose image has not been obtained can be captured in the specular reflection condition from a current position and orientation of the image capturer determined from information regarding the distance between the image capturer and the imaging target measured using the measurer.

6. The image capture system according to any one of claims 1 to 5,
wherein the processor is configured to divide the surface of the imaging target into smaller areas as a surface shape of the imaging target becomes more complex, as a level of accuracy required for a specular reflection image to be captured becomes higher, or as illumination area of the light source becomes smaller.

7. The image capture system according to any one of claims 1 to 6,
wherein the measurer is a sensor capable of measuring distances between the image capturer and a plurality of points on the imaging target.

8. The image capture system according to claim 7,
wherein the sensor is a light detection and ranging sensor capable of measuring a distance to the imaging target for each of pixels used by the camera to capture an image.

9. The image capture system according to any one of claims 1 to 8,
wherein the processor is configured to calculate a position and an orientation of the image capturer with which an image of the area of the imaging target whose image is to be captured in the specular reflection condition can be captured in the specular reflection condition using information regarding a positional relationship and an angular relationship between the light source and the camera in the image capturer and a position of the area in a surface shape of the imaging target, whose shape has been identified.

10. A program causing a computer to execute a process comprising:
measuring, using a portable image capturer including a light source, a camera, and a measurer capable of measuring a distance between the image capturer and an imaging target and a shape of the imaging target, the distance between the image capturer and the imaging target and the shape of the imaging target; and
assisting a user in capturing specular reflection images when the image capturer has moved to a position and an orientation with which an area of a surface of the imaging target whose distance and shape have been measured is in a specular reflection condition at a time of capture of an image of the imaging target by the image capturer.

11. A method comprising:
measuring, using a portable image capturer including a light source, a camera, and a measurer capable of measuring a distance between the image capturer and an imaging target and a shape of the imaging target, the distance between the image capturer and the imaging target and the shape of the imaging target; and
assisting a user in capturing specular reflection images when the image capturer has moved to a position and an orientation with which an area of a surface of the imaging target whose distance and shape have been measured is in a specular reflection condition at a time of capture of an image of the imaging target by the image capturer.
